# EUROPEAN PATENT SPECIFICATION

(11) **EP 2 700 488 B1**
(45) Date of publication and mention of the grant of the patent: **03.06.2015**
(21) Application number: 13181015.2
(22) Date of filing: 20.08.2013
(51) Int. Cl.: B29C 45/78, B29C 45/74, B29C 45/76

(54) **Injection molding machine**
Spritzgießmaschine
Machine de moulage à injection

(30) Priority: 24.08.2012 JP 2012185135
(43) Date of publication of application: 26.02.2014
(73) Proprietor: SUMITOMO HEAVY INDUSTRIES, LTD., Tokyo 141-6025 (JP)
(72) Inventor: Amano, Mitsuaki, Chiba 263-0001 (JP)
(74) Representative: Hoffmann Eitle

(56) References cited:
- EP-A1- 1 658 949
- JP-A- 2001 225 372

## Description

### BACKGROUND OF THE INVENTION

### 1. Field of the Invention

The present invention relates to injection molding machines.

### 2. Description of the Related Art

Injection molding machines include a cylinder fed with resin pellets as a molding material, a screw provided inside the cylinder, and a heating source (for example, a heater) that heats the cylinder. The resin fed into the groove of the screw gradually melts while moving forward inside the cylinder with the rotation of the screw. When a certain amount of molten resin is stored in front of the screw, the screw is caused to move forward to eject the molten resin from a nozzle formed at the end of the cylinder, so that the cavity space of a mold unit is filled with the molten resin. The molten resin filling in the cavity space is hardened, so that a molding product is obtained. (See, for example JP 2005-103875 A.)

Another document is JP 2001-225372 A1. This document mentions that while the screw is not rotated, the relationship between the quantity of heat generated by the heater and the temperature of the cylinder is obtained in advance. With the screw rotated, the controller receives detection signals from a temperature sensor, and the quantity of heat generated by the heater is calculated on the basis of the current and time applied to the heater by an energisation control part.

### SUMMARY OF THE INVENTION

According to related art (JP 2005-103875 A), the controllers of injection molding machines monitor the temperature of a cylinder, the amount of heat generated by a heater, and the like as factors that determine the condition of resin inside the cylinder, but are prevented from monitoring the condition of resin inside the cylinder.

The present invention has an object of providing an injection molding machine capable of monitoring the condition of resin inside a cylinder.

According to an embodiment of the present invention, an injection molding machine includes the features of claim 1.

According to an aspect of the present invention, an injection molding machine is provided that is capable of monitoring the condition of resin inside a cylinder.

It is to be understood that both the foregoing general description and the following detailed description are exemplary and explanatory and not restrictive of the invention.

### BRIEF DESCRIPTION OF THE DRAWINGS

FIG. 1 is a diagram illustrating an injection molding machine according to an embodiment of the present invention;
FIG. 2 is a diagram illustrating part of an injection molding machine according to an embodiment of the present invention;
FIG. 3 is a graph illustrating a difference between heating energy at a molding process and heating energy at a steady state when a setting temperature is low; and
FIG. 4 is a graph illustrating a difference between heating energy at a molding process and heating energy at a steady state when a setting temperature is high.

### DETAILED DESCRIPTION OF THE PREFERRED EMBODIMENTS

A description is given below, with reference to the accompanying drawings, of one or more embodiments of the present invention. In the drawings, the same or corresponding elements are referred to by the same or corresponding reference numerals, and their description is omitted.

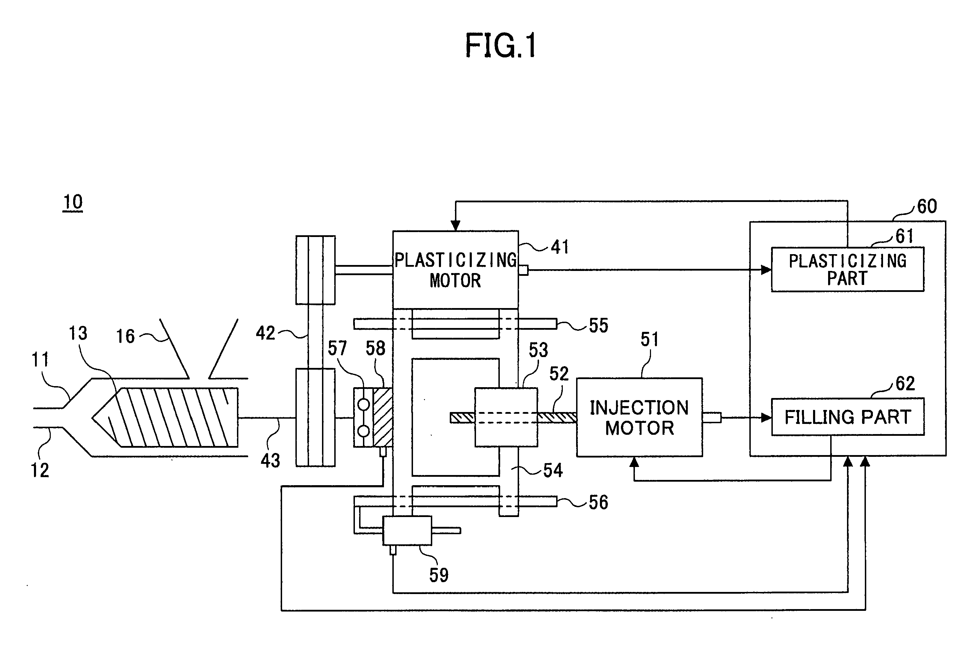

FIG. 1 is a diagram illustrating an injection molding machine according to an embodiment of the present invention. In the following description, a direction in which resin is injected is referred to as "front or forward direction" and a direction opposite to the direction in which resin is injected is referred to as "rear or backward direction."

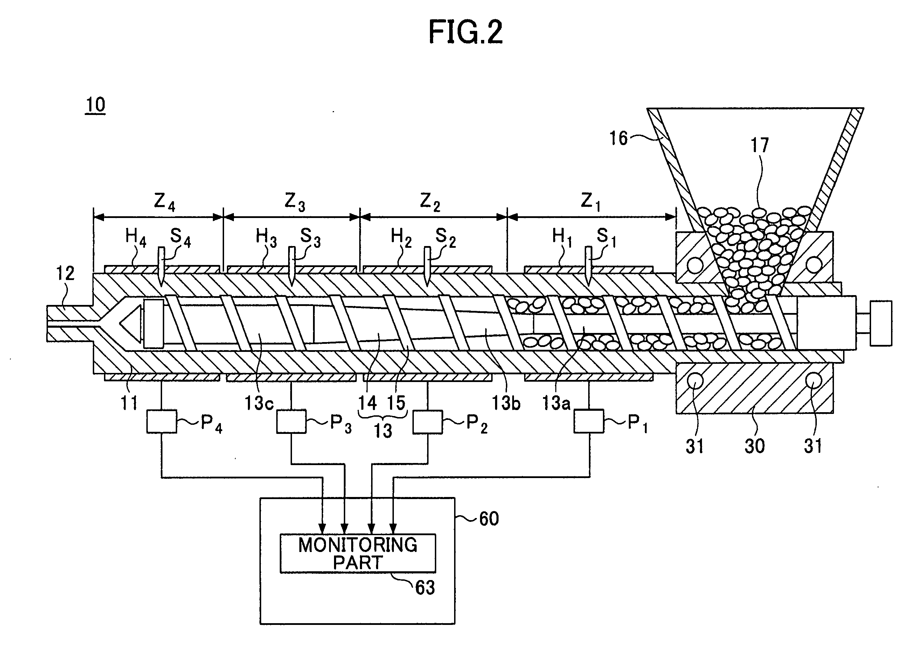

Referring to FIG. 1, according to an injection molding machine 10, resin melted inside the cylinder 11 is ejected from a nozzle 12 so as to fill in a cavity space inside a mold unit. The mold unit includes a stationary mold and a movable mold, and the cavity space is formed between the stationary mold and the movable mold at the time of mold clamping. The resin cooled and hardened in the cavity space is extracted as a molding product after mold opening. Resin pellets 17 (FIG. 2) as a molding material are fed to a rear part of the cylinder 11 from a hopper 16.

The hopper 16 may be replaced with a material feeder (for example, a screw feeder) that feeds a fixed amount of resin pellets to the cylinder 11.

The injection molding machine 10 includes a plasticizing motor 41 that causes the screw 13 provided inside the cylinder 11 to rotate. The plasticizing motor 41 may be a servomotor. The rotation of the plasticizing motor 41 is transmitted to an injection shaft 43 via a connecting member 42 including a belt and pulleys, so that the screw 13 is caused to rotate. As a result, the flight (thread) of the screw 13 moves to feed the resin fed into the groove of the screw 13 forward.

The injection molding machine 10 includes an injection motor 51 that causes the screw 13 to move in its axial directions. The injection motor 51 may be a servo motor. The rotation of the injection motor 51 is transmitted to a ball screw shaft 52. A ball screw nut 53, which is caused to move forward and backward by the rotation of the ball screw shaft 52, is fixed to a pressure plate 54. The pressure plate 54 is movable along guide bars 55 and 56 fixed to a base frame (not graphically illustrated). The forward and backward movements of the pressure plate 54 are transmitted to the screw 13 via a bearing 57, a resin pressure detector (for example, a load cell) 58, and the injection shaft 43, so that the screw 13 is caused to move forward and backward. The amounts of the forward and backward movements of the screw 13 are detected with a position detector 59 attached to the pressure plate 54.

The operation of the injection molding machine 10 is controlled by a controller 60. The controller 60 includes a central processing unit (CPU) and a memory. The CPU is caused to execute a program stored in the memory or the like to implement various kinds of functions. The controller 60 includes, for example, a plasticizing part 61 that controls a plasticizing process and a filling part 62 that controls a filling process.

Next, a description is given of an operation of the injection molding machine 10.

In the plasticizing process, the plasticizing part 61 causes the plasticizing motor 41 to rotate to cause the screw 13 to rotate. As a result, the flight (thread) of the screw 13 moves, so that the resin pellets 17 fed into the groove of the screw 13 are fed forward. The resin is heated by heat from the cylinder 11 while moving forward inside the cylinder 11, and is totally melted in an end part of the cylinder 11. As the molten resin is stored in front of the screw 13, the screw 13 moves backward. When the screw 13 moves backward a predetermined distance so that a predetermined amount of resin is stored in front of the screw 13, the plasticizing part 61 causes the plasticizing motor 41 to stop rotating so as to cause the screw 13 to stop rotating.

In the filling process, the filling part 62 causes the injection motor 51 to rotate to cause the screw 13 to move forward, so that the molten resin is pressed into a cavity space inside the mold unit in a clamped mold state. The force of the screw 13 that presses the molten resin is detected with the resin pressure detector 58 as a reaction force. That is, the resin pressure on the screw 13 (the injection pressure of the resin) is detected. The resin contracts in the cavity space by cooling. Therefore, in order to replenish the resin for its thermal contraction, the resin pressure on the screw 13 (the injection pressure of the resin) is held at a predetermined pressure in a hold pressure process.

FIG. 2 is a diagram illustrating part of an injection molding machine according to an embodiment of the present invention.

The injection molding machine 10 includes the cylinder 11, the screw 13 that feeds resin inside the cylinder 11, multiple heating sources H1, H2, H3 and H4, and a cooling unit 30 that cools a rear part of the cylinder 11.

The screw 13 is provided inside the cylinder 11 so as to be rotatable and axially movable. The screw 13 includes a screw rotating shaft 14 and a flight 15 as a unit. The flight 15 is provided helically around the screw rotating shaft 14. When the screw 13 rotates, the flight 15 of the screw 13 moves, so that the resin pellets 17 fed into the groove of the screw 13 are fed forward.

As illustrated in FIG. 2 by way of example, the screw 13 is divided into a feeding part 13a, a compression part 13b, and a metering part 13c from rear (the hopper 16 side) to front (the nozzle 12 side) in its axial direction. In the feeding part 13a, resin is received and conveyed forward. In the compression part 13b, the fed (conveyed) resin is caused to melt while being compressed. In the metering part 13c, the molten resin is metered by a fixed amount. The groove of the screw 13 is deep in the feeding part 13a and shallow in the metering part 13c, and becomes shallower toward the front in the compression part 13b. The screw 13 is not limited to a particular configuration. For example, the groove of the screw 13 may have a constant depth. Furthermore, the screw compression ratio may be constant. The screw compression ratio, which is the volume ratio of the groove, is determined by groove depth, flight pitch, flight width, etc.

As the heating sources H1 through H4, heaters that externally heat the cylinder 11 are used, for example. The heaters are so provided as to surround the cylinder 11.

The multiple heating sources H1 through H4 are arranged along the axial directions of the cylinder 11, and respectively heat corresponding zones (four zones Z1 through Z₄ in FIG. 2) into which the cylinder 11 is axially divided. The controller 60 performs feedback control on the multiple heating sources H1 through H4, so that the zones Z1 through Z4 are at respective setting temperatures. The respective temperatures of the zones Z1 through Z₄ are measured with corresponding temperature sensors S1 through S4. A heating source may also be provided for the nozzle 12.

The cooling unit 30 is provided on the rear side of the multiple heating sources H1 through H₄. The cooling unit 30 cools the rear part of the cylinder 11 and maintains the rear part of the cylinder 11 at a temperature at which the surfaces of the resin pellets 17 are prevented from melting, so as to prevent the occurrence of the bridge (agglomeration) of the resin pellets 17 in the rear part of the cylinder 11 and the hopper 16. The cooling unit 30 includes a passage 31 for a cooling medium such as water or air.

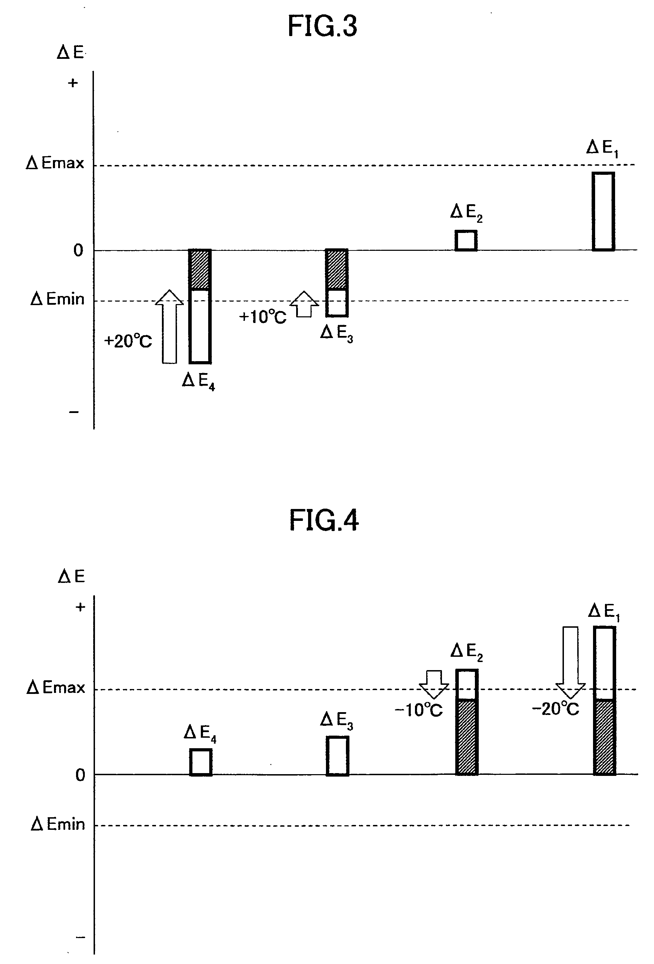

FIG. 3 is a graph illustrating a difference ΔEₙ between heating energy at a molding process, Emₙ, and heating energy at a steady state, Eiₙ, (ΔEₙ = Emₙ - Eiₙ) when the setting temperature is low. In FIG. 3, oblique lines illustrate changes in the case of increasing the setting temperature of the zone Z₃ by 10 °C and increasing the setting temperature of the zone Z₄ by 20 °C. The number "n" of each of Emₙ, Eiₙ, and ΔEₙ indicates the number "n" of a zone Zₙ in which a heating source Hₙ is provided. As the number "n" (n is a natural number and is 1, 2, 3 and 4 in FIG. 3) of the zone Zₙ increases, the zone Zₙ is positioned farther from the cooling unit 30. Here, the term "steady state" means a time at which the cylinder 11 is maintained at a setting temperature with the screw 13 being stopped.

The heating energy at a molding process, Emn, refers to thermal energy (J) that the heating source Hn supplies to the zone Zₙ during a predetermined time (for example, one molding, one plasticizing process, or the like). When the heating source Hₙ is a heater, the heating energy at a molding process, Emₙ, is equivalent to the amount of electric energy consumed by the heater during the above-described predetermined time. The amount of electric energy is measured with a watthour meter Pₙ connected to the heating source Hₙ.

At a molding process, shear heat is generated in the resin by the motion of the screw 13. The shear heat of the resin is mainly generated in the plasticizing process, where the screw 13 moves backward while rotating. When the amount of shear heat of the resin increases to some extent, the transfer of heat from the resin to the cylinder 11 starts. Furthermore, at a molding process, new resin pellets 17 are successively fed from the hopper 16 to the cylinder 11, so that heat is exchanged between the cylinder 11 and the resin.

The heating energy at a steady state, Eiₙ, refers to thermal energy (J) that the heating source Hₙ supplies to the zone Zₙ during a time equal to the above-described predetermined time. The heating energy at a steady state, Ein, may be measured with the watthour meter Pn immediately before the start of molding. The temperature of the cylinder 11 is stabilized at a setting temperature immediately before the start of molding. The heating energy at a steady state, Ein, may also be calculated by a simulation or the like.

At a steady state, the screw 13 is stopped, so that no shear heat is generated in the resin. Furthermore, at a steady state, no new resin pellets 17 are fed from the hopper 16 to the cylinder 11. Therefore, the heat exchange between the cylinder 11 and the resin that occurs at a molding process hardly occurs even when there is residual resin inside the cylinder 11.

The controller 60 includes a monitoring part 63 that monitors the difference ΔEₙ between the heating energy at a molding process, Emₙ, and the heating energy at a steady state, Eiₙ, (ΔEₙ = Emₙ - Eiₙ) with respect to each heating source Hₙ. When the difference ΔEₙ is positive, the amount of heat of the heating source Hₙ for maintaining the zone Zₙ at a setting temperature has increased, and the heat of the heating source Hₙ has been transferred to the resin via the cylinder 11. Accordingly, the positive difference ΔEₙ indicates that the heat of the cylinder 11 has been transferred to the resin in the zone Zₙ. On the other hand, when the difference ΔEₙ is negative, the amount of heat of the heating source Hₙ for maintaining the zone Zₙ at a setting temperature has decreased, and the heat of the resin has entered the zone Zₙ. Accordingly, the negative difference ΔEₙ indicates that the heat of the resin has been transferred to the cylinder 11 in the zone Zₙ. Δs the amount of shear heat of the resin increases, the difference ΔEₙ decreases. Thus, from the difference ΔEₙ, the qualitative amount of shear heat generated in the resin at a molding process and the direction and the amount of the movement of heat between the cylinder 11 and the resin at a molding process are determined, so that the condition of the resin inside the cylinder 11 is determined.

As illustrated in FIG. 3, when the setting temperatures of all the zones Zₙ are low, the resin is sheared strongly when the screw 13 is in motion, so that the amount of shear heat generated in the resin increases. Unlike the amount of heat applied by a heating source, the amount of shear heat generated in the resin is difficult to control.

Therefore, the monitoring part 63 may control the setting temperature of the zone Zₙ heated by the heating source Hₙ based on the result of monitoring. When the difference ΔEₙ is less than a lower limit value ΔEminₙ (ΔEₙ < ΔEminₙ) with respect to at least one heating source Hn, the monitoring part 63 increases the setting temperature of at least one zone Hₙ. How much the setting temperature is increased may be determined based on how less the difference ΔEₙ is than the lower limit value ΔEminₙ.

For example, as indicated by oblique lines in FIG. 3, the monitoring part 63 increases the setting temperatures of the zones (zones Z₃ and Z₄ in the case of FIG. 3) where the difference ΔEₙ is less than the lower limit value ΔEminₙ. As a result, the outputs of the heating sources H₃ and H₄ increase, so that the temperature of the resin increases to decrease the viscosity of the molten resin in the zones Z₃ and Z₄. Therefore, it is possible to reduce shear heat generated in the resin, so that it is possible to improve the stability of the cylinder temperature.

The monitoring part 63 may also increase the setting temperatures of the zones Z₁ and Z₂, which are closer to the cooling unit 30 than are the zones Z₃ and Z₄, where the difference ΔEₙ is less than the lower limit value ΔEminₙ. In this case, the resin that moves forward inside the cylinder 11 is sufficiently heated before reaching the zone Z₃, so that it is possible to reduce the amount of shear heat generated in the resin. This is particularly effective when it is difficult to change the setting temperatures of the zones Z₃ and Z₄.

In FIG. 3, the lower limit value ΔEminₙ is set to the same value in the multiple heating sources Hₙ. Alternatively, the lower limit value ΔEminₙ may be set to differ between the multiple heating sources Hₙ.

FIG. 4 is a graph illustrating the difference ΔEₙ between the heating energy at a molding process, Emₙ, and the heating energy at a steady state, Eiₙ, when the setting temperature is high. In FIG. 4, oblique lines illustrate a condition in the case of decreasing the setting temperature of the zone Z₁ by 20 °C and decreasing the setting temperature of the zone Z₂ by 10 °C.

As illustrated in FIG. 4, when the setting temperatures of all the zones Zₙ are high, so that the amount of heat applied by the heating source Hₙ is large and the amount of shear heat of the resin is small, heat is transferred from the cylinder 11 to the resin in each of the zones Zₙ. The amount of heat transferred is larger in the zone Zₙ closer to the cooling unit 30. When the amount of heat transferred from the cylinder 11 to the resin is too large, the output of the heating source Hₙ may have reached or be close to a rated output.

Therefore, when the difference ΔEₙ exceeds an upper limit value ΔEmaxₙ (ΔEₙ > ΔEmaxₙ) with respect to at least one heating source Hₙ, the monitoring part 63 controls the setting temperature of at least one zone Hₙ. The amount of control may be determined based on how much the difference ΔEₙ exceeds the upper limit value ΔEmaxₙ.

For example, as indicated by oblique lines in FIG. 4, the monitoring part 63 decreases the setting temperatures of the zones (zones Z₁ and Z₂ in the case of FIG. 4) where the difference ΔEₙ exceeds the upper limit value ΔEmaxₙ. As a result, the amounts of heat to be provided to the cylinder 11 by the heating sources H₁ and H₂ decrease, so that the outputs of the heating sources H₁ and H₂ become sufficiently lower than the rated outputs to stabilize the temperature of the cylinder 11 at the setting temperatures.

Alternatively, the monitoring part 63 may increase the setting temperatures of the zones Zₙ (zones Z₃ and Z₄ in the case of FIG. 4) where the difference ΔEₙ is less than or equal to the upper limit value ΔEmaxₙ, and increase the outputs of the heating sources H₃ and H₄. There is an exchange of heat between adjacent zones Zₙ. Therefore, by increasing the outputs of the heating sources H₃ and H₄ with available capacity, it is possible to decrease the outputs of the heating sources H₁ and H₂ without available capacity.

In FIG. 4, the upper limit value ΔEmaxₙ is set to the same value in the multiple heating sources Hn. Alternatively, the upper limit value Δmaxₙ may be set to differ between the multiple heating sources Hₙ.

A description is given above of an injection molding machines using embodiments. The present invention, however, is not limited to the specifically disclosed embodiments, and variations and modifications may be made without departing from the scope of the present invention.

For example, the heating sources H₁ through H₄, which are heaters that externally heat the cylinder 11 according to the above-described embodiments, may alternatively be induction heating coils that perform induction heating on the cylinder 11, for example. The kinds of heating sources are not limited in particular.

Furthermore, the injection molding machine, which is an inline screw type according to the above-described embodiments, may alternatively be a screw pre-plasticizing type. According to the screw pre-plasticizing type, resin melted in a plasticizing cylinder is fed to an injection cylinder, and the molten resin is injected into a mold unit from the injection cylinder. According to the screw pre-plasticizing type, the plasticizing cylinder is heated with a heating source, and a screw is provided inside the plasticizing cylinder.

## Claims

1. An injection molding machine (10), comprising:
a cylinder (11) fed with a molding material (17);
a screw (13) provided inside the cylinder (11) so as to be rotatable and axially movable;
one or more heating sources (Hₙ) configured to heat the cylinder (11); and
a monitoring part (63) configured to monitor, with respect to each of the one or more heating sources (Hₙ), a difference between heating energy of the heating source (Hₙ) at a molding process and heating energy of the heating source (Hₙ) at a steady state, wherein the steady state is a time when the cylinder (11) is maintained at a setting temperature with the screw (13) being stopped.

2. The injection molding machine (10) as claimed in claim 1, wherein the monitoring part (63) is configured to control a setting temperature of one or more zones (Zₙ) of the cylinder (11) heated by the one or more heating sources (Hₙ) based on a monitoring result.

3. The injection molding machine (10) as claimed in claim 2, wherein
the heating sources (Hₙ) are arranged along an axial direction of the cylinder (11), and
the monitoring part is configured to control, based on the difference with respect to a first one of the heating sources (Hₙ), the setting temperature of one of the zones (Zₙ) heated by a second one of the heating sources (Hₙ).

4. The injection molding machine (10) as claimed in claim 2 or 3, wherein the monitoring part is configured to increase the setting temperature of at least one of the zones (Zₙ) when the difference with respect to at least one of the heating sources (Hₙ) is less than a lower limit value.

5. The injection molding machine (10) as claimed in any of claims 2 to 4, wherein the monitoring part is configured to control the setting temperature of at least one of the zones (Zₙ) when the difference with respect to at least one of the heating sources (Hₙ) exceeds an upper limit value.

## Patentansprüche

1. Spritzgießmaschine (10), umfassend:
einen Zylinder (11), der mit einem Gießmaterial (17) gespeist wird;
eine Schnecke (13), die innerhalb des Zylinders (11) ausgestaltet ist, um rotierbar und axial beweglich zu sein;
eine oder mehr Heizungsquellen (Hn), die dazu ausgestaltet sind, den Zylinder (11) zu heizen; und
einen Überwachungsteil (63), der dazu ausgestaltet ist, bezüglich jeder der einen oder mehr Heizungsquellen (Hn) einen Unterschied zwischen einer Heizungsenergie der Heizungsquelle (Hn) bei einem Gießprozess und einer Heizungsenergie der Heizungsquelle (Hn) in einem stationären Zustand zu überwachen, wobei der stationäre Zustand eine Zeit ist, wenn der Zylinder (11) bei einer Erstarrungstemperatur gehalten wird, wobei die Schnecke (13) angehalten wird.

2. Spritzgießmaschine (10) nach Anspruch 1, wobei der Überwachungsteil (63) dazu ausgestaltet ist, eine Erstarrungstemperatur von einer oder mehr Zonen (Zn) des Zylinders (11), der durch die eine oder mehr Heizungsquellen (Hn) geheizt wird, auf Basis eines Überwachungsresultats zu steuern.

3. Spritzgießmaschine (10) nach Anspruch 2, wobei
die Heizungsquellen (Hn) entlang einer axialen Richtung des Zylinders (11) angeordnet sind, und
der Überwachungsteil dazu ausgestaltet ist, auf Basis des Unterschieds bezüglich einer ersten der Heizungsquellen (Hn) die Erstarrungstemperatur der Zonen (Zn), die durch eine zweite der Heizungsquellen (Hn) geheizt werden, zu steuern.

4. Spritzgießmaschine (10) nach Anspruch 2 oder 3, wobei der Überwachungsteil dazu ausgestaltet ist, die Erstarrungstemperatur von mindestens einer der Zonen (Zn) zu erhöhen, wenn der Unterschied bezüglich mindestens einer der Heizungsquellen (Hn) kleiner als ein unterer Grenzwert ist.

5. Spritzgießmaschine (10) nach einem der Ansprüche 2 bis 4, wobei der Überwachungsteil dazu ausgestaltet ist, die Erstarrungstemperatur von mindestens einer der Zonen (Zn) zu steuern, wenn der Unterschied bezüglich mindestens einer der Heizungsquellen (Hn) einen oberen Grenzwert überschreitet.

## Revendications

1. Machine de moulage par injection (10), comprenant :
un cylindre (11) alimenté avec un matériau de moulage (17) ;
une vis (13) prévue à l'intérieur du cylindre (11) de manière à pouvoir tourner et se déplacer axialement ;
une ou plusieurs source(s) de chauffage (Hn) configurée(s) pour chauffer le cylindre (11) ; et
une partie de surveillance (63) configurée pour surveiller, par rapport à chacune de la ou des plusieurs source(s) de chauffage (Hn), une différence entre l'énergie de chauffage de la source de chauffage (Hn) au niveau d'un processus de moulage et l'énergie de chauffage de la source de chauffage (Hn) à un état d'équilibre, où l'état d'équilibre est un moment où le cylindre (11) est maintenu à une température de durcissement avec la vis (13) étant arrêtée.

2. Machine de moulage par injection (10) telle que revendiquée dans la revendication 1, dans laquelle la partie de surveillance (63) est configurée pour réguler une température de durcissement d'une ou de plusieurs zone(s) (Zn) du cylindre (11) chauffé par la ou les plusieurs source(s) de chauffage (Hn) sur la base d'un résultat de surveillance.

3. Machine de moulage par injection (10) telle que revendiquée dans la revendication 2, dans laquelle
les sources de chauffage (Hn) sont agencées le long d'une direction axiale du cylindre (11), et
la partie de surveillance est configurée pour réguler, sur la base de la différence par rapport à une première source parmi les sources de chauffage (Hn), la température de durcissement de l'une des zones (Zn) chauffée par une deuxième source parmi les sources de chauffage (Hn).

4. Machine de moulage par injection (10) telle que revendiquée dans la revendication 2 ou 3, dans laquelle la partie de surveillance est configurée pour augmenter la température de durcissement d'au moins l'une des zones (Zn) lorsque la différence par rapport à au moins l'une des sources de chauffage (Hn) est inférieure à une valeur limite inférieure.

5. Machine de moulage par injection (10) telle que revendiquée dans l'une des revendications 2 à 4, dans laquelle la partie de surveillance est configurée pour réguler la température de durcissement d'au moins l'une des zones (Zn) lorsque la différence par rapport à au moins l'une des sources de chauffage (Hn) est supérieure à une valeur limite supérieure.
